(19) Europäisches Patentamt
European Patent Office
Office européen des brevets

(11) **EP 3 704 537 B1**

(12) **EUROPEAN PATENT SPECIFICATION**

(45) Date of publication and mention
of the grant of the patent:
**02.11.2022 Bulletin 2022/44**

(51) International Patent Classification (IPC):
**G02F 1/167** (2019.01)　　**G09G 3/20** (2006.01)
**G03G 17/04** (2006.01)　　**B32B 37/02** (2006.01)
**B05D 1/02** (2006.01)

(21) Application number: **17930327.6**

(22) Date of filing: **03.11.2017**

(52) Cooperative Patent Classification (CPC):
**G03G 17/04; B32B 37/02; B32B 38/105;**
**G02F 1/167; G02F 1/16757; G02F 1/1679;**
B05D 1/02; B05D 1/32; B32B 2457/20

(86) International application number:
**PCT/US2017/059887**

(87) International publication number:
**WO 2019/089042 (09.05.2019 Gazette 2019/19)**

(54) **PROCESSES FOR PRODUCING ELECTRO-OPTIC DISPLAYS**

VERFAHREN ZUR HERSTELLUNG VON ELEKTROOPTISCHEN ANZEIGEN

PROCÉDÉS DE PRODUCTION D'AFFICHAGES ÉLECTRO-OPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.09.2020 Bulletin 2020/37**

(60) Divisional application:
**22194246.9**

(73) Proprietor: **E Ink Corporation**
**Billerica, Massachusetts 01821-4165 (US)**

(72) Inventors:
• **BULL, Stephen**
**Billerica, Massachusetts 01821-4165 (US)**
• **BREWER, Damien**
**Billerica, Massachusetts 01821-4165 (US)**
• **ANSETH, Jay William**
**Billerica, Massachusetts 01821-4165 (US)**
• **PAOLINI, Richard J., Jr.**
**Billerica, Massachusetts 01821-4165 (US)**

• **FAUVELL, Thomas**
**Billerica, Massachusetts 01821-4165 (US)**
• **HARRIS, George G.**
**Billerica, Massachusetts 01821-4165 (US)**
• **REGAN, Michael Thomas**
**Billerica, Massachusetts 01821-4165 (US)**

(74) Representative: **Cole, David John**
**46 Kirkhill Gardens**
**West Greenlees Estate**
**Cambuslang**
**Glasgow G72 8EZ (GB)**

(56) References cited:
**JP-A- 2005 173 044　　US-A1- 2004 217 929
US-A1- 2008 023 332　　US-A1- 2011 069 370
US-A1- 2013 082 120　　US-A1- 2014 240 817
US-B1- 6 337 761　　US-B1- 9 835 925
US-B2- 6 982 178　　US-B2- 7 561 324
US-B2- 7 839 564**

## Description

This application is related to U.S. Patents Nos. 6,982,178; 7,561,324; and 7,839,564.

This invention relates to processes for depositing encapsulated electrophoretic media by spraying.

The term "electro-optic", as applied to a material or a display, is used herein in its conventional meaning in the imaging art to refer to a material having first and second display states differing in at least one optical property, the material being changed from its first to its second display state by application of an electric field to the material. Although the optical property is typically color perceptible to the human eye, it may be another optical property, such as optical transmission, reflectance, luminescence or, in the case of displays intended for machine reading, pseudo-color in the sense of a change in reflectance of electromagnetic wavelengths outside the visible range.

The term "gray state" is used herein in its conventional meaning in the imaging art to refer to a state intermediate two extreme optical states of a pixel, and does not necessarily imply a black-white transition between these two extreme states. The term "monochrome" may be used hereinafter to denote a drive scheme which only drives pixels to their two extreme optical states with no intervening gray states.

Some electro-optic materials are solid in the sense that the materials have solid external surfaces, although the materials may, and often do, have internal liquid- or gas-filled spaces. Such displays using solid electro-optic materials may hereinafter for convenience be referred to as "solid electro-optic displays". Thus, the term "solid electro-optic displays" includes rotating bichromal member displays, encapsulated electrophoretic displays, microcell electrophoretic displays and encapsulated liquid crystal displays.

The terms "bistable" and "bistability" are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element. It is shown in U.S. Patent No. 7,170,670 that some particle-based electrophoretic displays capable of gray scale are stable not only in their extreme black and white states but also in their intermediate gray states, and the same is true of some other types of electro-optic displays. This type of display is properly called "multi-stable" rather than bistable, although for convenience the term "bistable" may be used herein to cover both bistable and multi-stable displays.

Several types of electro-optic displays are known, for example

    (a) a rotating bichromal member type as described, for example, in U.S. Patents Nos. 5,808,783; 5,777,782; 5,760,761; 6,054,071 6,055,091; 6,097,531; 6,128,124; 6,137,467; and 6,147,791;
    (b) an electrochromic medium, for example an electrochromic medium in the form of a nanochromic film comprising an electrode formed at least in part from a semiconducting metal oxide and a plurality of dye molecules capable of reversible color change attached to the electrode; see, for example U.S. Patents Nos. 6,301,038; 6,870,657; and 6,950,220; and
    (c) an electro-wetting display as described in Hayes, R.A., et al., "Video-Speed Electronic Paper Based on Electrowetting", Nature, 425, 383-385 (2003) and U.S. Patent No. 7,420,549.

One type of electro-optic display, which has been the subject of intense research and development for a number of years, is the particle-based electrophoretic display, in which a plurality of charged particles move through a fluid under the influence of an electric field. Electrophoretic displays can have attributes of good brightness and contrast, wide viewing angles, state bistability, and low power consumption when compared with liquid crystal displays. Nevertheless, problems with the long-term image quality of these displays have prevented their widespread usage. For example, particles that make up electrophoretic displays tend to settle, resulting in inadequate service-life for these displays.

As noted above, electrophoretic media require the presence of a fluid. In most prior art electrophoretic media, this fluid is a liquid, but electrophoretic media can be produced using gaseous fluids; see, for example, Kitamura, T., et al., "Electrical toner movement for electronic paper-like display", IDW Japan, 2001, Paper HCS1-1, and Yamaguchi, Y., et al., "Toner display using insulative particles charged triboelectrically", IDW Japan, 2001, Paper AMD4-4). See also U.S. Patents Nos. 7,321,459 and 7,236,291. Such gas-based electrophoretic media appear to be susceptible to the same types of problems due to particle settling as liquid-based electrophoretic media, when the media are used in an orientation which permits such settling, for example in a sign where the medium is disposed in a vertical plane. Indeed, particle settling appears to be a more serious problem in gas-based electrophoretic media than in liquid-based ones, since the lower viscosity of gaseous suspending fluids as compared with liquid ones allows more rapid settling of the electrophoretic particles.

Numerous patents and applications assigned to or in the names of the Massachusetts Institute of Technology (MIT) and E Ink Corporation describe various technologies used in encapsulated electrophoretic and other electro-optic media. Such encapsulated media comprise numerous small capsules, each of which itself comprises an internal phase containing electrophoretically-mobile particles in a fluid medium, and a capsule wall surrounding the internal phase. Typically, the capsules are themselves held within a polymeric binder to form a coherent layer positioned between two electrodes. The technologies described in these patents and applications include:

(a) Electrophoretic particles, fluids and fluid additives; see for example U.S. Patents Nos. 7,002,728; and 7,679,814;

(b) Capsules, binders and encapsulation processes; see for example U.S. Patents Nos. 6,922,276; and 7,411,719;

(c) Films and sub-assemblies containing electro-optic materials; see for example U.S. Patents Nos. 6,825,829; 6,982,178; 7,236,292; 7,443,571; 7,513,813; 7,561,324; 7,636,191; 7,649,666; 7,728,811; 7,729,039; 7,791,782; 7,839,564; 7,843,621; 7,843,624; 8,034,209; 8,068,272; 8,077,381; 8,177,942; 8,390,301; 8,482,852; 8,786,929; 8,830,553; 8,854,721; and 9,075,280; and U.S. Patent Applications Publication Nos. 2009/0109519; 2009/0168067; 2011/0164301; 2014/0027044; 2014/0115884; and 2014/0340738;

(d) Backplanes, adhesive layers and other auxiliary layers and methods used in displays; see for example U.S. Patents Nos. D485,294; 6,124,851; 6,130,773; 6,177,921; 6,232,950; 6,252,564; 6,312,304; 6,312,971; 6,376,828; 6,392,786; 6,413,790; 6,422,687; 6,445,374; 6,480,182; 6,498,114; 6,506,438; 6,518,949; 6,521,489; 6,535,197; 6,545,291; 6,639,578; 6,657,772; 6,664,944; 6,680,725; 6,683,333; 6,724,519; 6,750,473; 6,816,147; 6,819,471; 6,825,068; 6,831,769; 6,842,167; 6,842,279; 6,842,657; 6,865,010; 6,967,640; 6,980,196; 7,012,735; 7,030,412; 7,075,703; 7,106,296; 7,110,163; 7,116,318; 7,148,128; 7,167,155; 7,173,752; 7,176,880; 7,190,008; 7,206,119; 7,223,672; 7,230,751; 7,256,766; 7,259,744; 7,280,094; 7,327,511; 7,349,148; 7,352,353; 7,365,394; 7,365,733; 7,382,363; 7,388,572; 7,442,587; 7,492,497; 7,535,624; 7,551,346; 7,554,712; 7,583,427; 7,598,173; 7,605,799; 7,636,191; 7,649,674; 7,667,886; 7,672,040; 7,688,497; 7,733,335; 7,785,988; 7,843,626; 7,859,637; 7,893,435; 7,898,717; 7,957,053; 7,986,450; 8,009,344; 8,027,081; 8,049,947; 8,077,141; 8,089,453; 8,208,193; 8,373,211; 8,389,381; 8,498,042; 8,610,988; 8,728,266; 8,754,859; 8,830,560; 8,891,155; 8,989,886; 9,152,003; and 9,152,004; and U.S. Patent Applications Publication Nos. 2002/0060321; 2004/0105036; 2005/0122306; 2005/0122563; 2007/0052757; 2007/0097489; 2007/0109219; 2009/0122389; 2009/0315044; 2011/0026101; 2011/0140744; 2011/0187683; 2011/0187689; 2011/0292319; 2013/0278900; 2014/0078024; 2014/0139501; 2014/0300837; 2015/0171112; 2015/0205178; 2015/0226986; 2015/0227018; 2015/0228666; and 2015/0261057; and International Application Publication No. WO 00/38000; European Patents Nos. 1,099,207 B1 and 1,145,072 B1;

(e) Color formation and color adjustment; see for example U.S. Patents Nos. 7,075,502; and 7,839,564;

(f) Methods for driving displays; see for example U.S. Patents Nos. 7,012,600; and 7,453,445;

(g) Applications of displays; see for example U.S. Patents Nos. 7,312,784; and 8,009,348; and

(h) Non-electrophoretic displays, as described in U.S. Patents Nos. 6,241,921; 6,950,220; 7,420,549; 8,319,759; and 8,994,705; and U.S. Patent Application Publication No. 2012/0293858.

Many of the aforementioned patents and applications recognize that the walls surrounding the discrete microcapsules in an encapsulated electrophoretic medium could be replaced by a continuous phase, thus producing a so-called polymer-dispersed electrophoretic display, in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, the aforementioned U.S. Patent No. 6,866,760. Accordingly, for purposes of the present application, such polymer-dispersed electrophoretic media are regarded as sub-species of encapsulated electrophoretic media.

Although electrophoretic media are often opaque (since, for example, in many electrophoretic media, the particles substantially block transmission of visible light through the display) and operate in a reflective mode, many electrophoretic displays can be made to operate in a so-called "shutter mode" in which one display state is substantially opaque and one is light-transmissive. See, for example, U.S. Patents Nos. 5,872,552; 6,130,774; 6,144,361; 6,172,798; 6,271,823; 6,225,971; and 6,184,856. Dielectrophoretic displays, which are similar to electrophoretic displays but rely upon variations in electric field strength, can operate in a similar mode; see U.S. Patent No. 4,418,346. Other types of electro-optic displays may also be capable of operating in shutter mode. Electro-optic media operating in shutter mode may be useful in multi-layer structures for full color displays; in such structures, at least one layer adjacent the viewing surface of the display operates in shutter mode to expose or conceal a second layer more distant from the viewing surface.

An encapsulated electrophoretic display typically does not suffer from the clustering and settling failure mode of traditional electrophoretic devices and provides further advantages, such as the ability to print or coat the display on a wide variety of flexible and rigid substrates. (Use of the word "printing" is intended to include all forms of printing and coating, including, but without limitation: pre-metered coatings such as patch die coating, slot or extrusion coating, slide or cascade coating, curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet printing processes; electrophoretic deposition (See U.S. Patent No. 7,339,715); and other similar techniques.) Thus, the resulting display can be flexible. Further, because the display medium can be printed (using a variety of methods), the display itself can be made inexpensively.

Other types of electro-optic materials may also be used in the present invention.

The aforementioned U.S. Patent No. 6,982,178 describes a method of assembling a solid electro-optic display (including an encapsulated electrophoretic display) which is well adapted for mass production. Essentially, this patent describes a so-called "front plane laminate" ("FPL") which comprises, in order, a light-transmissive electrically-conductive layer; a layer of a solid electro-optic medium in electrical contact with the electrically-conductive layer; an adhesive layer; and a release sheet. Typically, the light-transmissive electrically-conductive layer will be carried on a light-transmissive substrate, which is preferably flexible, in the sense that the substrate can be manually wrapped around a drum (say) 10 inches (254 mm) in diameter without permanent deformation. The term "light-transmissive" is used in this patent and herein to mean that the layer thus designated transmits sufficient light to enable an observer, looking through that layer, to observe the change in display states of the electro-optic medium, which will normally be viewed through the electrically-conductive layer and adjacent substrate (if present); in cases where the electro-optic medium displays a change in reflectivity at non-visible wavelengths, the term "light-transmissive" should of course be interpreted to refer to transmission of the relevant non-visible wavelengths. The substrate will typically be a polymeric film, and will normally have a thickness in the range of about 1 to about 25 mil (25 to 634 $\mu$m), preferably about 2 to about 10 mil (51 to 254 $\mu$m). The electrically-conductive layer is conveniently a thin metal or metal oxide layer of, for example, aluminum or ITO, or may be a conductive polymer. Poly(ethylene terephthalate) (PET) films coated with aluminum or ITO are available commercially, for example as "aluminized Mylar" ("Mylar" is a Registered Trade Mark) from E.I. du Pont de Nemours & Company, Wilmington DE, and such commercial materials may be used with good results in the front plane laminate.

Assembly of an electro-optic display using such a front plane laminate may be effected by removing the release sheet from the front plane laminate and contacting the adhesive layer with the backplane under conditions effective to cause the adhesive layer to adhere to the backplane, thereby securing the adhesive layer, layer of electro-optic medium and electrically-conductive layer to the backplane. This process is well-adapted to mass production since the front plane laminate may be mass produced, typically using roll-to-roll coating techniques, and then cut into pieces of any size needed for use with specific backplanes.

The aforementioned U.S. Patent No. 7,561,324 describes a so-called "double release sheet" which is essentially a simplified version of the front plane laminate of the aforementioned U.S. Patent No. 6,982,178. One form of the double release sheet comprises a layer of a solid electro-optic medium sandwiched between two adhesive layers, one or both of the adhesive layers being covered by a release sheet. Another form of the double release sheet comprises a layer of a solid electro-optic medium sandwiched between two release sheets. Both forms of the double release film are intended for use in a process generally similar to the process for assembling an electro-optic display from a front plane laminate already described, but involving two separate laminations; typically, in a first lamination the double release sheet is laminated to a front electrode to form a front sub-assembly, and then in a second lamination the front sub-assembly is laminated to a backplane to form the final display, although the order of these two laminations could be reversed if desired.

The aforementioned U. S. Patent No. 7,839,564 describes a so-called "inverted front plane laminate", which is a variant of the front plane laminate described in the aforementioned U.S. Patent No. 6,982,178. This inverted front plane laminate comprises, in order, at least one of a light-transmissive protective layer and a light-transmissive electrically-conductive layer; an adhesive layer; a layer of a solid electro-optic medium; and a release sheet. This inverted front plane laminate is used to form an electro-optic display having a layer of lamination adhesive between the electro-optic layer and the front electrode or front substrate; a second, typically thin layer of adhesive may or may not be present between the electro-optic layer and a backplane. Such electro-optic displays can combine good resolution with good low temperature performance.

As already indicated, the aforementioned front plane laminates, inverted front plane laminates and double release films are well adapted for production by roll-to-roll processes, thus producing the front plane laminate, inverted front plane laminate or double release film in the form of a roll of material which can be severed into pieces of the size needed for individual displays and laminated to appropriate backplanes. However, also as already indicated, to effect the necessary lamination, a layer of lamination adhesive normally needs to be present between the electro-optic layer itself and the backplane, and this layer of lamination adhesive remains in the final display between the two electrodes. The presence of this lamination adhesive layer has significant effects on the electro-optic properties of the display. Inevitably, some of the voltage drop between the electrodes occurs within the lamination adhesive layer, thus reducing the voltage available for driving the electro-optic layer. The effect of the lamination adhesive tends to become greater at lower temperatures, and this variation in the effect of lamination adhesive with temperature complicates the driving of the display. The voltage drop within the lamination adhesive can be reduced, and the low temperature operation of the display improved, by increasing the conductivity of the lamination adhesive layer, for example by doping the layer with tetrabutylammonium hexafluorophosphate or other materials as described in U.S. Patents Nos. 7,012,735 and 7,173,752. However, increasing the conductivity of the lamination adhesive layer in this manner tends to increase pixel blooming (a phenomenon whereby the area of the electro-optic layer which changes optical state in response to change of voltage at a pixel electrode is larger than the pixel electrode itself), and this blooming tends to reduce the resolution of the display. Hence, this type of display apparently intrinsically requires a compromise between low temperature performance and display resolution.

JP 2005-173044A describes a process for depositing capsules of an electrophoretic medium on to a substrate, the process comprising forming a dispersion of the capsules in a liquid; depositing the capsules on the substrate while a masking material covers part of the substrate; and, after the deposition of the capsules, removing the masking material and the capsules thereon so that capsules remain only on those portions of the substrate where the masking material was not present. The main method used for capsule deposition is knife coating but spray coating and other alternative coating methods are mentioned.

US 2013/0082120 A1 describes a spray coating device in which the material to be sprayed, such a paint, is fed through a first orifice and a jet of gas is fed through a second, annular orifice surrounding the first orifice.

The present invention relates to processes for the production of electro-optic displays which do not require the presence of a lamination adhesive layer between the electro-optic layer and the backplane; these processes involve coating the electro-optic material on to the backplane.

The present invention also relates to novel processes for application of encapsulated electrophoretic media to substrates.

The electrophoretic media described in the aforementioned E Ink patents and applications, and similar prior art electrophoretic media typically comprise electrophoretic particles, charge control agents, image stability agents and flocculants in a non-polar liquid, typically encapsulated in a flexible organic matrix such as a gelatin/acacia coacervate. To produce commercial displays, it is necessary to coat a thin layer (preferably a monolayer - see U.S. Patent No. 6,839,158) of capsules on a substrate, which may be a front substrate bearing an electrode (see the aforementioned U.S. Patent No. 6,982,178), a backplane or a release sheet. Hitherto, coating of encapsulated electrophoretic media on substrates has typically been effected by slot coating, in which a slurry of capsules in a carrier medium is forced through a slot on to a substrate which is moving relative to the slot. Slot coating imposes limitations upon the viscosity and other physical properties of the material being coated and typically requires the addition of slot coating additives to control the rheology of the coated material to ensure that the coating does not flow and develop non-uniformities in thickness prior to drying. Thus, in slot coating electrophoretic capsules are typically supplied in the form of aqueous slurries containing optional latex binder, rheology modification agents, ionic dopants, and surfactants. These additives remain in the final dried electrophoretic medium and may affect its properties, including its electro-optic properties.

Furthermore, although slot coating is well adapted for applying electrophoretic media to continuous webs, it is not well adapted for "patch" coating of discrete areas of a web or discrete parts (for example, individual backplanes) lying on a moving belt, since settling and self-segregation of capsule slurry within the slot die manifold become problematic during such "interrupted" capsule deposition processes. Slot coating is generally not useful for non-planar substrates, which is unfortunate since encapsulated electrophoretic media are well adapted for coating three-dimensional objects, including architectural features. Other problems with slot coating include chatter-like streaks parallel to the coating slot die (these streaks are believed to result from periodic bunching or jamming of capsules), and streaking in the direction of coating (believed to be due to capsule jamming or non-uniform flows in delivery of capsules to the slot coating slot die).

The aforementioned problems with slot coating have resulted in a search for an alternative coating technology able to cope with patch coating and coating of non-planar substrates, as well as planar objects and webs. One well established coating technology which has been considered for this purpose is spray coating, i.e., the pneumatic atomization and deposition of capsule dispersions. Spray coating is a mature technology, but prior art attempts to apply the technology to capsule deposition have been subject to various defects and modes of failure. Because they typically have flexible capsule walls, capsules deform and sometime rupture during spraying, either during the atomization step or upon impact on the target. The consequences of significant capsule rupture, including the release of electrophoretic particles, fluid etc., are so severe that, so far as the present inventors are aware, unacceptable levels of ruptured capsules have by themselves been sufficient to doom all previous attempts to spray coat encapsulated electrophoretic media. The present invention provides a spray coating process which reduces or eliminates these problems.

The present invention may include reducing the adhesion of capsules to a substrate during coating in order to facilitate close packing of capsules on the substrate.

As previously mentioned, in the production of electrophoretic displays it is generally preferred to form a monolayer of capsules on a substrate. However, a common problem encountered when coating electrophoretic capsules on to a substrate (typically a ITO/PET film, a PET/release film, or any type of silicone release film) is that the capsules adhere strongly to the substrate and are unable to rearrange themselves into an optimally packed monolayer upon drying. Various coating materials have been found to significantly reduce capsule-substrate adhesion, thus allowing the capsules to rearrange themselves by means of capillary forces during drying. Unfortunately, if such coating materials are used in slot coating processes employing a doctor blade, as is common during slot coating, the reduced capsule-substrate adhesion causes the capsules to not pass properly past the doctor blade; instead, the vast majority of the capsules are simply pushed in front of the doctor blade, leaving only a very sparse capsule coating on the substrate.

This invention provides a process for depositing capsules of an electrophoretic medium on to a substrate as set out in the appended claims.

This process may hereinafter for convenience be referred to as the "spray coating process" of the present invention. The process may include shaping the spray by feeding a continuous stream of gas through a plurality of shaping orifices disposed adjacent the spray. The spray may be directed on to any type of substrate, including a web, a plurality of discrete objects disposed on a support or one or more three-dimensional (i.e., non-planar) objects. If, as is typically the case, the capsule walls are formed from a hydrophilic material (such as the aforementioned gelatin/acacia coacervate), the liquid used to disperse the capsules is desirably aqueous; depending upon the specific capsules and liquid used, the liquid may optionally comprise any one or more of pH modifiers, surfactants and ionic dopants. The gas passed through both the second orifice and the shaping orifices is typically air, but it some cases it may be useful to use an inert gas, for example nitrogen.

The spray coating process of the present invention may include the use of a masking material covering part of the substrate so that, after removal of the masking material, capsules remain only on those portions of the substrate where the masking material was not present. Such a "masked spray coating process" of the invention may comprise multiple steps with each step involving the use of a different mask and a different capsule dispersion so that the different capsule dispersions are disposed in different areas of the final display.

The process of the invention may be used for producing a sub-assembly for use in an electro-optic display by:

providing a backplane comprising at least one electrode located in a first area of the backplane; covering a second area of the backplane spaced from the electrode with a masking layer; coating the backplane having the masking layer thereon with a layer of an electro-optic material; and removing the masking layer, and the portion of the layer of electro-optic medium thereon, from the backplane, thereby producing a sub-assembly comprising the backplane having its first area covered by the layer of electro-optic material but its second area free from the layer of electro-optic material.

This process may hereinafter for convenience be referred to as the "masked backplane" process. In one form of this process, the second area of the backplane comprises a contact pad intended, in the final display, to make electrical contact with the front electrode of the display. In this form of the invention, a light-transmissive conductive layer may be partially covered with a lamination adhesive, and laminated to the backplane/electro-optic material sub-assembly with the lamination adhesive contacting the electro-optic material and the light-transmissive conductive layer in electrical contact with the contact on the backplane. This electrical contact may be direct, or may be made via an electrically conductive ink or similar deformable conductive material.

In another form of the process, after the layer of electro-optic material has been coated on the backplane, but before the masking layer is removed, a layer of lamination adhesive (preferably a 100 per cent solids radiation-curable adhesive) is coated over the electro-optic material, and then the masking layer is removed, together with both the portions of the layers of electro-optic material and the lamination adhesive thereon. A light-transmissive electrically-conductive layer can then be laminated to the lamination adhesive in the first area of the backplane; the light-transmissive electrically-conductive layer preferably extends into the second area of the backplane so as to make electrical contact with the contact pad in this second area.

In a further form of the process, the backplane has a third area which is covered by a second masking layer which can be removed separately from the (first) masking layer covering the second area. In this form of the process, after the layer of electro-optic material has been coated, the second masking layer is removed, thus exposing the third area of the backplane. A light-transmissive electrically-conductive layer is now coated over the backplane.

The process of the invention may also be used to form a monolayer of capsules on a substrate by depositing a solution of a water-swellable polymer on the substrate; and thereafter depositing a quantity of the capsules sufficient to form a monolayer of capsules on to the substrate, and allowing the capsules to arrange themselves into a monolayer on the substrate.

This process may hereinafter for convenience be referred to as the "swellable polymer coating variant" of the present invention. The polymer used may be, for example, a polysaccharide, such as a pectin, or a protein, especially an albumin. The albumin used may be, for example, egg albumin or bovine serum albumin; other types of albumin may also be suitable. At least when the capsules are formed of a hydrophilic material (such as the gelatin/acacia coacervate mentioned in many of the E Ink patents and applications mentioned above), the polymer solution is preferably an aqueous solution. The deposition of the capsules is desirably effected by a process such as spray coating which does not require contact of a coating head or coating bar with the capsule layer.

Figures 1-5 and 10-12 do not illustrate processes of the present invention but do illustrate masking and swellable polymer coating techniques which may be useful in the spraying coating processes of the present invention

Figure 1 of the accompanying drawings is a schematic top plan view of a backplane undergoing a first masked backplane process.

Figure 2A is a schematic section along line 2A-2A in Figure 1 but showing the backplane after deposition of electro-optic material thereon.

Figure 2B is a schematic section similar to that of Figure 2A but showing the backplane after the masking layer has been removed.

Figure 2C is a schematic section through a sub-assembly comprising a light-transmissive, electrically-conductive layer and a layer of lamination adhesive.

Figure 2D is a schematic section similar to those of Figures 2A and 2B but showing the backplane after lamination of a front electrode and front substrate to the electro-optic material via a layer of lamination adhesive.

Figure 3A is a schematic section similar to that of Figure 2A but showing the same stage in a second masked backplane process.

Figure 3B is a schematic section similar to those of Figures 2B and 3A but showing the backplane after formation of a layer of lamination adhesive overlying the electro-optic material but before removal of the masking layer.

Figure 3C is a schematic section similar to that of Figure 3B but showing the backplane after removal of the masking layer.

Figure 3D is a schematic section similar to that of Figures 2D and 3C but showing the backplane after lamination of a front electrode and front substrate to the electro-optic material via the layer of lamination adhesive.

Figure 4A is a schematic section similar to those of Figures 2A and 3A but showing the same stage in a third masked backplane process which uses two separate masking layers.

Figure 4B is a schematic section similar to that of Figure 4A but showing the backplane after removal of the second masking layer.

Figure 4C is a schematic section similar to those of Figures 4A and 4B but showing the backplane after formation of a light-transmissive front electrode layer overlying the electro-optic material.

Figure 4D is a schematic section similar to those of Figures 4A-4C but showing the backplane after removal of the first masking layer.

Figure 5 is a schematic top plan view, similar to that of Figure 1, of the backplane used in the third masked backplane process after application of the two masking layers but before deposition of the electro-optic layer.

Figure 6 is a schematic cross-section through a simple spray coating nozzle used in the spray coating process of the present invention.

Figure 7 is a cross-section through a more complex spray coating nozzle used in the spray coating process of the present invention.

Figure 8 is an enlarged view of the portion of the nozzle lying within the dotted box in Figure 7.

Figure 9 is a graph illustrating preferred parameters used in the spray coating process of the present invention.

Figure 10 is a top plan view of a first electrophoretic display produced by a masked spray coating process of the present invention.

Figure 11 is a top plan view of a second electrophoretic display produced by a masked spray coating process.

Figures 12A-12H are time lapse micrographs showing an experimental demonstration of the swellable polymer coating process using capsules deposited from a pipette on to a microscope slide.

**Masked backplane process**

As indicated above, the masked backplane process provides a process for producing a sub-assembly for use in an electro-optic display. This process comprises providing a backplane comprising at least one electrode located in a first area of the backplane; covering a second area of the backplane spaced from the electrode with a masking layer; coating the backplane having the masking layer thereon with a layer of an electro-optic material; and removing the masking layer, and the portion of the layer of electro-optic medium thereon, from the backplane, thereby producing a sub-assembly comprising the backplane having its first area covered by the layer of electro-optic material but its second area free from the layer of electro-optic material. Thus, the masked backplane process allows for formation of a sub-assembly, and ultimately an electro-optic display, without the use of a pre-formed front plane laminate and without the presence of a lamination adhesive layer between the electro-optic layer and the backplane, thus reducing or eliminating the problems associated with this lamination adhesive layer, as discussed above.

The masked backplane process builds the sub-assembly or display starting from the backplane. The process may be carried out on individual backplanes but for mass production purposes it is more conveniently effected on backplanes arranged in a multi-up configuration. Conceptually, when used to produce a complete display, the masked backplane process may be regarded as involving (a) the backplane itself, which may be a segmented, passive matrix or active matrix backplane; (b) a masking layer for protecting areas of the backplane which are not be covered by the electro-optic material (the protected areas will typically be those required for making a "top plane connection" to the front electrode of the final display, and may also include areas used for conductors leading to the pixel electrodes and electronic components such as row and column drivers); (c) a solid electro-optic medium, typically an encapsulated electrophoretic medium; (d) a light-transmissive, electrically-conductive layer which forms the front electrode of the display; and (e) a means, typically a lamination adhesive, for securing the light-transmissive, electrically-conductive layer to the solid electro-optic medium.

As already indicated, the backplane used in the masked backplane process may be of any known type, although care should be taken to ensure that the backplane used does not damage the electro-optic layer. For example if the electro-optic layer is to be formed from an encapsulated electrophoretic medium, the backplane should not have such sharp changes in level as to risk puncturing some of the capsules. The masking layer may be formed from a simple polymeric film which adheres to the backplane either because of its own physical properties or with the aid of an adhesive coating, but should desirably not be more than about 75 μm in thickness; polymeric films which have been found useful as masking layers include Kapton tape (a polyimide tape available from du Pont de Nemours & Company, Wilmington, DE) and RP301 film (an acrylic film available form Nitto America, Inc., Fremont CA). The solid electro-optic layer is typically an encapsulated electrophoretic layer but may also be a polymer-dispersed electrophoretic layer or a rotating bichromal member or electrochromic layer. Care should be taken to ensure that the physical properties of the electro-optic layer are such that the portions of the layer overlying the masking layer are removed when the masking layer itself is removed, without tearing the masking layer so that portions of the masking layer are left on the backplane and/or without portions of the electro-optic layer in the unmasked portion of the backplane being inadvertently removed. The material used to form the front electrode and the adhesive can be any of the materials used in the prior art for this purpose.

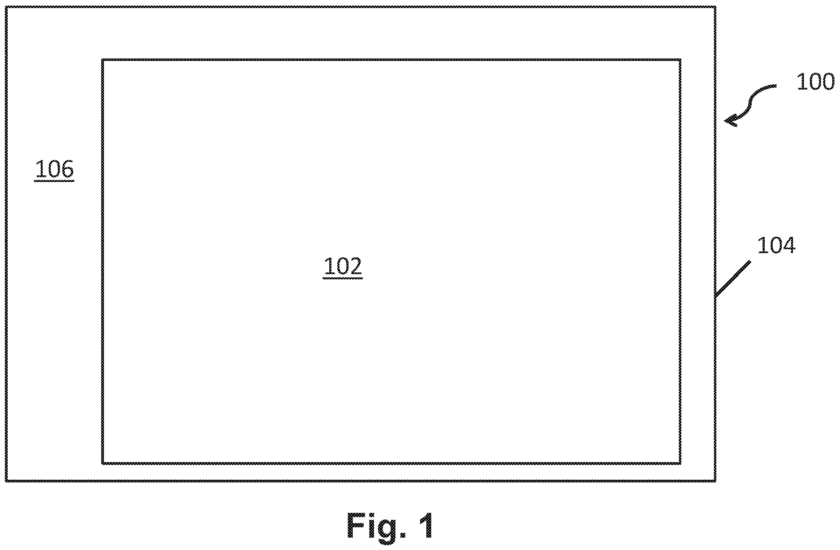

Specific masked backplane processes will now be described in more detail with reference to Figures 1 to 4 of the accompanying drawings. Figure 1 is a top plan view of an active matrix backplane (generally designated 100) having a first, central area 102 provided with a two dimensional array of pixel electrodes (not shown), and a second, peripheral area 104 covered by a masking film 106. (It will be appreciated that the relative sizes and dispositions of the first and second areas 102 and 104 can vary widely and it is not necessary that the second area 104 surround the first area 102.) The second area 104 will normally include a contact pad for making electrical contact with a front electrode (described below) and may include row and column electrodes connected to the pixel electrodes in the first area 102 and sockets for row and column drivers.

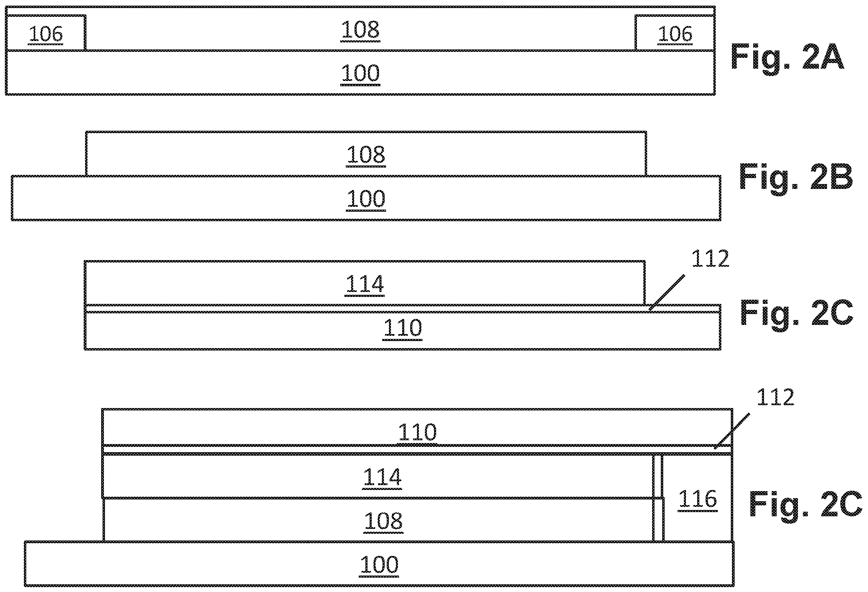

After provision of the masking layer on the backplane, the next step of the masked backplane process is coating the backplane with a layer of electro-optic material 108, as illustrated in Figure 2A. Any technique capable of depositing the layer of electro-optic material on the backplane may be used to form layer 108; with an encapsulated electrophoretic electro-optic material, slot die coating, bar coating and spray coating methods have all been successfully used to apply the electrophoretic material directly to a masked backplane. Depending upon the deposition method used, the layer of electro-optic material may or may not cover completely both the first and second areas of the backplane; for example, some spray coating methods may only coat part of the masked area.

The next step of the process is removal of the masking layer 106 to expose the second area 104 of the backplane 100, and the electrical connectors and/or sockets thereon, as illustrated in Figure 2B. As already noted, it is important to choose the masking layer and the electro-optic material such that the masking film and overlying layer of electro-optic material are removed completely from the second area 104 but that no portion of the electro-optic material overlying the first area 102 is removed.

To complete the assembly of an electro-optic display, it is necessary to secure a light-transmissive, electrically conductive layer over the layer of electro-optic material 108. As shown in Figure 2C, this is most conveniently effected by providing a front substrate 110 carrying the light-transmissive, electrically conductive layer or front electrode layer 112. As discussed for example in the aforementioned U.S. Patent No. 6,982,178, polymeric films coated with indium tin oxide (ITO) are available commercially and are very suitable for providing the front substrate 110 and front electrode layer 112. A layer of lamination adhesive 114 is then formed on the front electrode layer 112, leaving exposed a portion of the front electrode layer 112 needed to provide an electrical connection to the backplane 100. In practice, it is generally most convenient to coat the whole of the front electrode layer 112 with the lamination adhesive layer 114 using a roll-to-roll process, cut the resultant roll into portions of the size needed for individual displays, and then to remove or "clean" the lamination adhesive from the portion of the front electrode layer 112 required to provide the electrical connection. A variety of methods for cleaning the lamination adhesive from the requisite portion of the front electrode layer 112 are known in the art; see, for example, U.S. Patent No. 7,733,554.

The sub-assembly shown in Figure 2C is then laminated to the sub-assembly shown in Figure 2C with the lamination adhesive layer 114 in contact with the electro-optic layer 108 to form the final display shown in Figure 2D. Typically, a conductive ink or similar material 116 is placed on the backplane 100 adjacent the portion of the front electrode layer 112 not covered by the adhesive layer 114, as described in the aforementioned U.S. Patent No. 6,982,178. This final display has the advantage that the electro-optic layer 108 is in direct contact with the backplane 100 (without any intervening adhesive layer), thereby maximizing the resolution of the display. In addition, the positioning of the adhesive layer 114 adjacent the front electrode layer 112 allows the adhesive layer 114 to be made highly conductive without detriment to the resolution of the display.

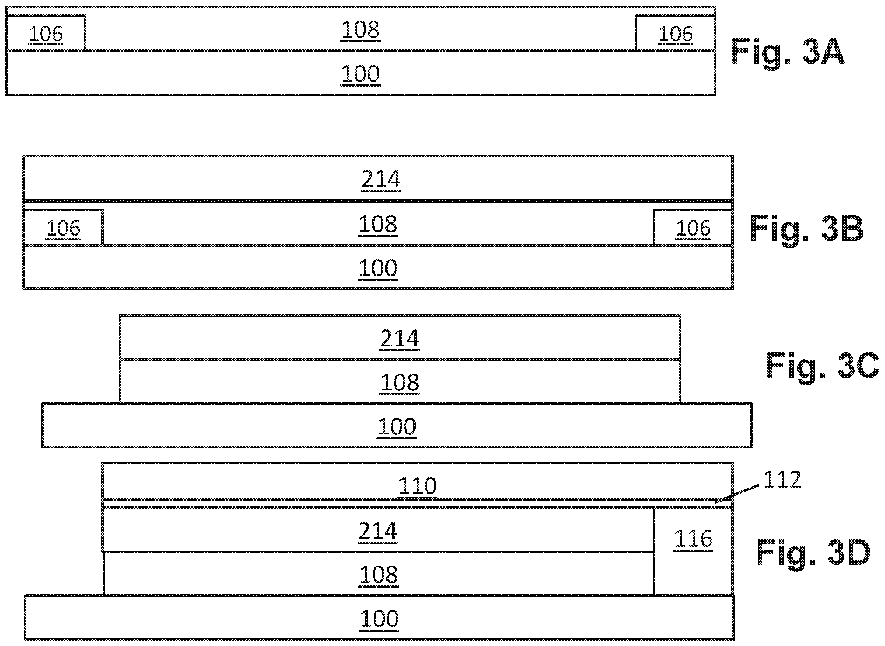

Figures 3A-3D illustrate a second masked backplane process in which an adhesive layer is formed overlying the electro-optic layer before the masking layer is removed. The first stages of this second process, namely the provision of a masking layer 106 on a backplane 100 and the deposition of an electro-optic layer 108 over the backplane, are identical to the first process described above, and result in the sub-assembly shown in Figure 3A, which is essentially identical to that shown in Figure 2A. However, the next step in the second process is the coating of a 100 per cent solids radiation-curable adhesive layer 214 over the electro-optic layer 108, to produce the structure shown in Figure 3B. The adhesive layer 214 is left uncured at this step of the process. The masking layer 106 is next removed, as shown in Figure 3C, thereby removing the portions of both the electro-optic layer 108 and the adhesive layer 214 previously overlying the masking layer 106. Again, it is important to choose the masking layer, the electro-optic material and the adhesive such that the masking film and overlying layers of electro-optic material and adhesive are removed completely from the second area 104 but that no portion of the electro-optic material overlying the first area 102 is removed.

The final step in the second process is the lamination of a film comprising a front substrate 110 and front electrode layer 112 to the sub-assembly shown in Figure 3C to produce the final display shown in Figure 3D, with the provision of conductive ink 116 or similar conductive material as described above with reference to Figure 2D. Since the radiation-curable adhesive layer 214 is already present in the sub-assembly of Figure 3C, no further adhesive is needed and the front substrate 110 and front electrode layer 112 can be laminated at substantially room temperature and without the use of high pressure. The use of the 100% solids adhesive layer 214 allows the front electrode layer 112 and front substrate 110 to take a variety of forms including flexible substrates and also rigid substrates like glass. Once the front electrode layer 112 and front substrate 110 have been applied, the adhesive layer 214 can be radiation cured with ultraviolet radiation to produce the final display shown in Figure 3D. This display, like that shown in Figure 2D, has the advantage that the electro-optic layer 108 is in direct contact with the backplane 100 to maximize the resolution of the display. In addition, the positioning of the adhesive layer 214 adjacent the front electrode layer 112 allows the adhesive layer 214 to be made highly conductive without detriment to the resolution of the display. The process of Figures 3A-3D eliminates the top plane cleaning used in the process of Figures 2A-2D, allows for a thinner adhesive layer because this layer is applied as a liquid, allows for flexible or rigid front electrode layers and eliminates the need for a high temperature lamination step.

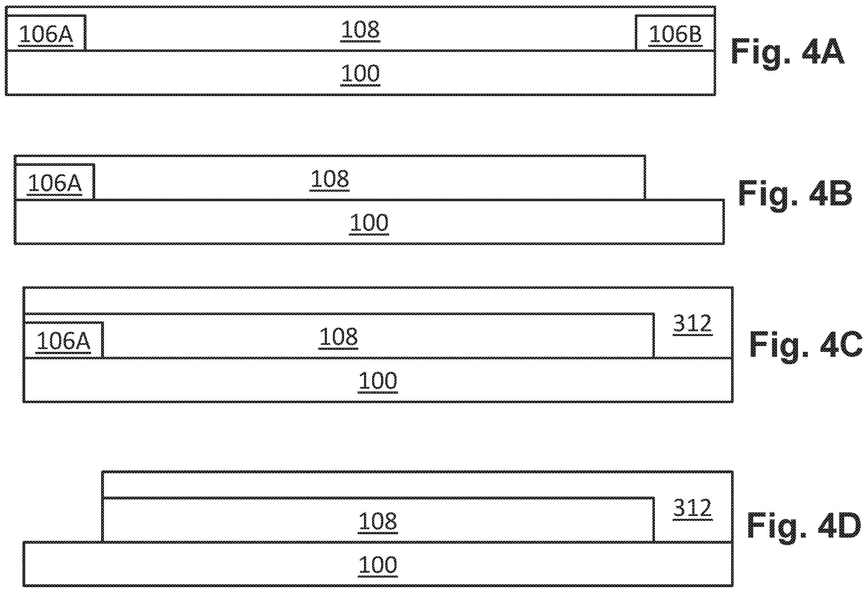

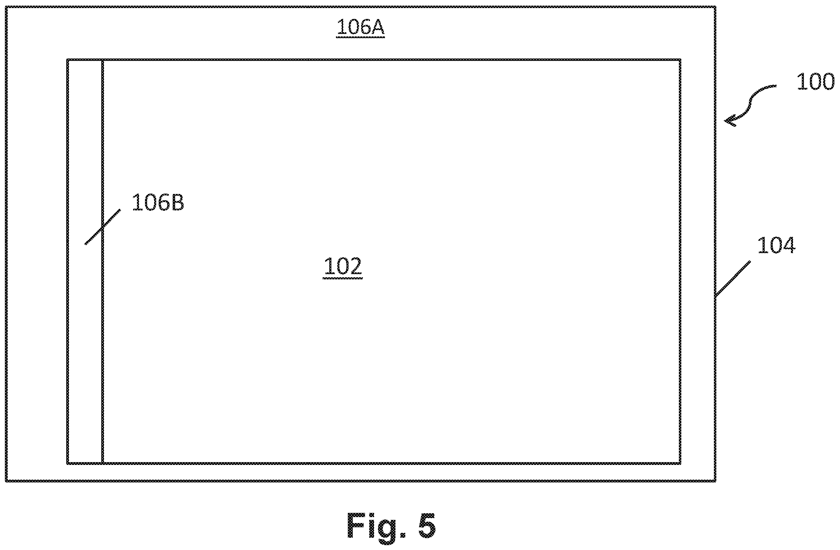

Figures 4A-4D illustrate a third masked backplane process in which two separate masking layers are used and a front electrode layer is formed directly on the electro-optic layer. The first stages of this third process, namely the provision of two separate masking layers 106A and 106B on a backplane 100 and the deposition of an electro-optic layer 108 over the backplane, are generally similar to the first and second processes described above, and result in the sub-assembly shown in Figure 4A, which is generally similar to those shown in Figures 2A and 3A except for the provision of the two separate masking layers 106A and 106B. Masking layer 106A covers the bonding areas for the driver electronics and edge seal areas, while masking layer 106B covers the area for front electrode connection(s). The two masking layers do not have to be separate films but can be in the form of a single film cut to allow two portions thereof to be removed separately, as illustrated schematically in Figure 5. Alternatively, depending upon the geometry of the areas covered by the first and second masking films, the first masking film may cover all areas of the backplane which are not to have electro-optic material deposited thereon, and the second masking film may be a separate film applied over the first masking film. The masking films previously described can be used. The masked backplane shown in Figure 5 then has electro-optic material deposited thereon by any of the methods previously described to produce the structure shown in Figure 4A.

The next step in the second process is removal of the second masking layer 106B without removing the first masking layer 106A, thus exposing the areas of the backplane needed for front electrode contacts, and producing the structure shown in Figure 4B. Next, a light-transmissive, electrically-conductive front electrode layer 312 is deposited (normally by a wet coating process) over the backplane to produce the structure shown in Figure 4C. The front electrode layer 312 not only forms a front electrode over the electro-optic layer 108 but also forms a front electrode connection with the exposed areas of the backplane, as illustrated at the right hand side of Figure 4C. The front electrode layer 312 may be formed from a conductive polymer, for example poly(3,4-ethylenedioxythiophene) ("PEDOT"), normally used in the form of its poly(styrenesulfonate) salt ("PEDOT:PSS") or a polyaniline, or may be formed from network of conductors, for example carbon nanotubes or nanowires. The present inventors have successfully coated both PEDOT and carbon nanotube front electrodes directly on an encapsulated electrophoretic layer.

The final step of the process is removal of the first masking layer 106A, together with the overlying portions of the electro-optic layer 108 and the front conductor layer 312 to produce the display illustrated in Figure 4D. If desired driver electronics and/or edge seals may now be placed in the exposed areas of the backplane.

The display shown in Figure 4D, like those shown in Figures 2D and 3D, has the advantage that the electro-optic layer is in direct contact with the backplane, thus maximizing the resolution of the display. However, in contrast to the displays described above, the display shown in Figure 4D has no lamination adhesive between its electrodes, thus completely eliminating the electrical effect of such adhesive. Thus, the display structure shown in Figure 4D enables the highest resolution and temperature performance for a given electro-optic layer. One potential practical problem with the display structure shown in Figure 4D is that any pore or pinhole in the electro-optic layer would allow the coated front electrode to come into electrical contact with the pixel electrodes on the backplane, thus shorting the display.

From the foregoing, it will be seen that the masked backplane process can provide high resolution addressing without compromising temperature performance, thus removing the limitations imposed by prior art display construction methods which require a thin adhesive between the electro-optic layer and the backplane. Additionally the masked backplane process opens up the possibility of conducting the entire manufacturing process in a single fab.

**Spray coating process**

As already mentioned, this invention provides a process for spraying capsules of an electrophoretic medium on to a substrate. This process comprises forming a dispersion of the capsules in a liquid; feeding the dispersion through a first orifice; and feeding a continuous stream of gas through a second, annular orifice surrounding the first orifice, thereby forming a spray of the capsules. This spray coating process has the advantage over slot coating that spray coating normally does not require the use of rheology modifiers in the liquid being sprayed, so that the final coating is free from such rheology modifiers and hence free from the effects such rheology modifiers may have upon the properties of slot coated electrophoretic media. Typically, in spray coating, only the additives actually needed in the final product need be added to the liquid being sprayed.

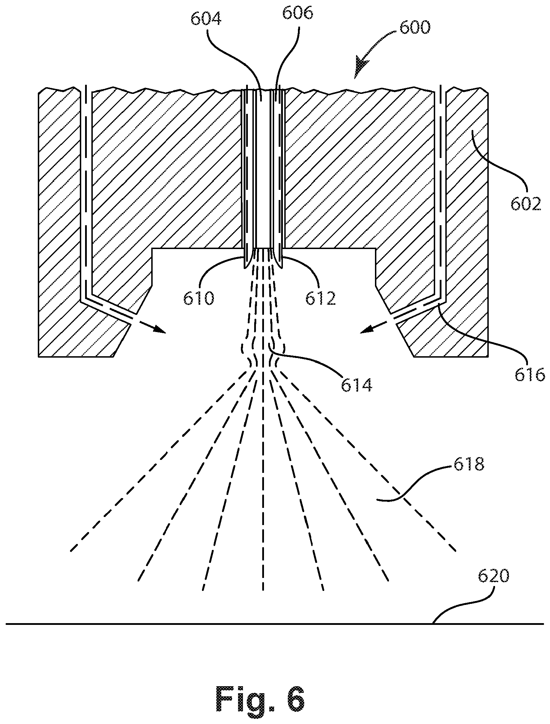

Figure 6 is a schematic cross-section through a simple spray coating nozzle (generally designated 600) which may be used in the spray coating process of the present invention. The nozzle 600 comprises a substantially cylindrical body 602 having a central, axial bore 604 through which is pumped electrophoretic capsules (not shown) dispersed in a liquid (also not shown). The central bore 604 is surrounded by an annular bore 606, through which is forced a continuous stream of air. The lower end of the central bore 604 terminates in an orifice 608, which the lower end of the annular bore 606 terminates in an annular orifice 610, which surrounds orifice 608. A cylindrical baffle 612 surrounds the annular orifice 610. The air flow through the annular orifice 610 constrained by the baffle 612 causes the dispersion of capsules passing through orifice 608 to form a spray or jet 614.

The nozzle 600 is also provided with shaping air bores 616, which may be six or eight in number. As shown in Figure 6, the peripheral portions of the nozzle 600, through which the bores 616 pass, extend downwardly below the orifices 608 and 610 and the baffle 612, and the lower portions of the bores 616 are directly downwardly and inwardly. Shaping air is forced continuously through the bores 616 so that it impinges on the jet 614, thereby causing the jet to open out into a wide spray 618, which impinges on a substrate 620 disposed below the nozzle 600.

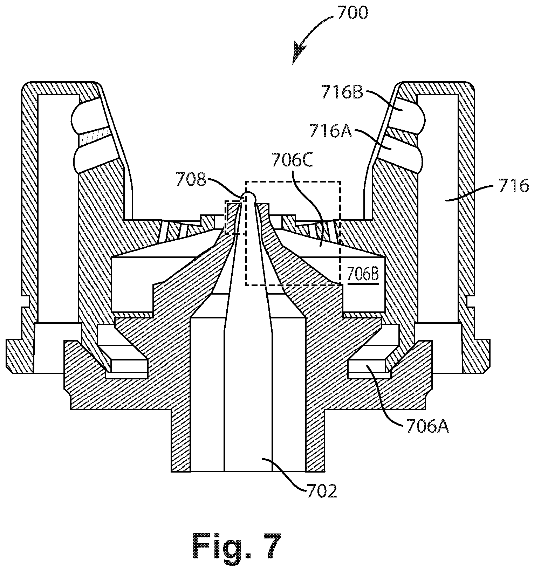

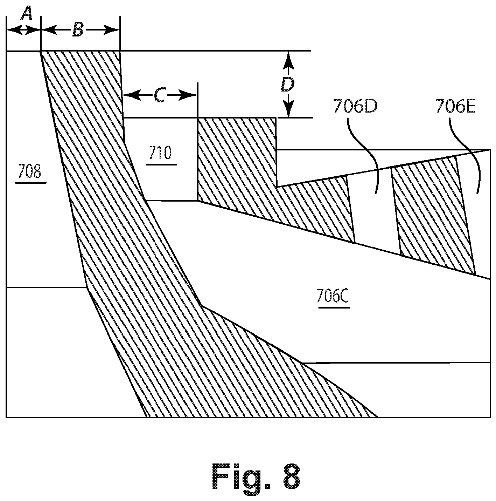

Figures 7 and 8 illustrate a high-volume low-pressure atomization nozzle (generally designated 700) suitable for use in a high volume spray coating process of the present invention. It will be appreciated that in use the nozzle 700 would normally be inverted relative to the position illustrated in Figures 7 and 8 so that capsules emerging from the nozzle would be directed downwardly on to a substrate, as illustrated in Figure 6.

As will readily be apparent to those familiar with spray nozzle technology, the nozzle 700 shown in Figures 7 and 8 operates in substantially the same manner as the nozzle 600 shown in Figure 6 but the nozzle 700 has the following structural differences:

> (a) the central axial bore 702, through which the capsule dispersion passes, tapers adjacent its orifice 708 to increase the velocity at which the capsule dispersion passes through this orifice;
> (b) the simple annular bore 606 in Figure 6 is replaced by a combination of air feed passage 706A, a cylindrical air plenum 706B, a conical tapering portion 706C and an outlet portion 706D (Figure 8) which terminates in an annular orifice 710; in addition, auxiliary shaping air jets are provided by bores 706E which extend from the tapering portion 706C to orifices on either side of the orifice 708; and
> (c) the shaping air bores 716 are provided with double outlet portions 716A, 716B to provide greater control of the shape of the final capsule spray.

Figure 8 shows four dimensions which have been found important in achieving good spray coating results from the nozzle 700 shown in Figures 7 and 8, these four dimensions being (A) the radius of the central orifice 708; (B) the radial distance between the outer edge of the central orifice 708 and the inner edge of the annular orifice 706D; (C) the radial width of the annular orifice 706D; and (D) the axial distance between the orifices 708 and 710.

The quality of capsules coatings is assessed in terms of their reproducibility granularity, mean coating weight, uniformity and defect density; defect density is quantified by the number of non-switching capsules per unit display area in a standard display structure, which for present purposes is defined as a backplane bearing, in order, a 25 $\mu$m layer of lamination adhesive, a 20 $\mu$m capsule layer and a front substrate comprising an ITO layer on 25 $\mu$m polyethylene terephthalate film. The first factor to be considered in achieving good spray coatings is capsule and gas flow rates and pressures. It has been found empirically that capsule spraying is best achieved using a high-volume, low-pressure ("HVLP") nozzle; a variety of standard nozzle designs known in the art may be used, but the preferred design is that shown in Figures 7 and 8. Preferably, the ratio of atomization air outlet cross-section to capsule dispersion outlet cross section is not greater than about 8.5, and preferably between about 5.0 and about 7.0. The capsule dispersion orifice diameter (twice A in Figure 8) is preferably in the range of about 1.0-1.40 mm. The capsule dispersion may contain capsules in a weight fraction preferably between about 38.0 and about 40.5 weight per cent; this dispersion may optionally contain 1-butanol at a concentration of up to about 4.0 weight per cent and a surfactant, such as Triton X-100 at a concentration of up to about 0.04 weight per cent.

A wide range of capsule dispersion feed rates and atomization air feed rates can be used in the spray coating process of the present invention. Typically, the capsule dispersion feed rate, $M_F$, is not less than about 30 g/min and not greater than about 70 g/min, the optimum being determined mainly on the basis of an appropriate residence time in the atomization zone, that is to say the region in which the capsule dispersion column emerging from the first orifice breaks into sheets of fluid, which subsequently break into ligaments and finally droplets. Desirably, the droplet size distribution is such that the mean capsule count per droplet is less than about 5.0, and the standard deviation is less than about 3.0, capsules per droplet. The atomization air feed rate is set on the basis of a critical air velocity, $v^*$, measured at the second orifice, and is typically of the order of about 100 m/sec. In the preferred process, a total air feed rate, $M_A$, (including atomization air and shaping air) of approximately 150 to 200 g/min is employed in the absence of shaping air, and up to 300 g/min with shaping air.

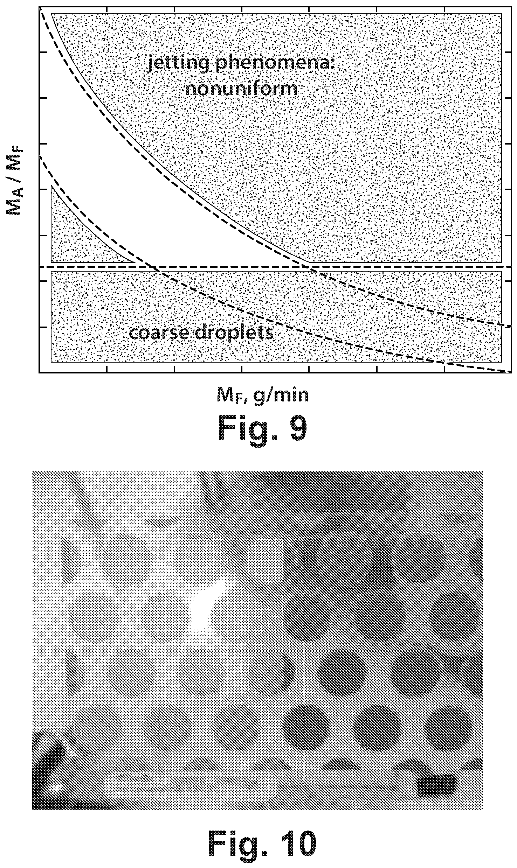

Empirically, it has been found that the operating window for HVLP atomization in terms of $M_A/M_F$ versus $M_F$, has the form shown in Figure 9, although the numerical values involved will vary with the particular nozzle design used. The unshaded region of the graph of Figure 9 represents the desirable operating window. The shaded regions represent defect regions which result in undesirable spray patterns such as excessive fluid velocity ("jetting"), highly irregular and transient spray structure, and coarse droplet distribution.

In the spray coating process of the present invention, the air feed rate and nozzle-to-substrate distance should be carefully controlled to avoid capsule damage. In general, a nozzle-to-substrate distance of 200 to 320 mm is optimal, and this distance should be adjusted approximately inversely to atomization air velocity squared.

It has also been found that the quality and uniformity of the sprayed capsule coating can be strongly influenced by pretreatment of the substrate and by additives added to the capsule dispersion. Useful pretreatments and additives include but are not limited to:

1) Capsule dispersions that incorporate surfactants such as Triton X-100, butanol etc. to improve wetting of the substrate surface;
2) Pre-coating of the substrate surface with sub-layers incorporating surfactants such as Triton X-100, 1-butanol, and others possessing a detergent structure, and optionally a polyurethane latex;
3) Pre-treating the substrate with an atmospheric plasma or corona discharge treatment; and
4) The capsule dispersion may contain polymeric binders, for example a polyurethane latex

**Example**

A capsule dispersion was sprayed with an HVLP nozzle using inlet atomization air at a pressure of 20 psig (about 330 MNw m$^{-2}$) measured at the nozzle inlet, with a gravity feed of the capsule dispersion. Depending on the dispersion viscosity, the mass flow rate of the dispersion was approximately 25 to 35 g/min. The spray was directed vertically downward and deposition took place at near normal incidence on to a horizontal substrate so as to avoid inclined plane flow after deposition. The nozzle-to-substrate distance was 240 to 280 mm, but may be lower or higher. Capsule spraying took plane across a thin film transistor backplane in one or more passes to achieve a target mean coating weight given by the following relationship:

$$\Theta = M_F \frac{\eta}{Wv} N m \frac{dv}{dt} = F^B + F^H + F^P$$

where $\Theta$ is the mean coating weight (in g/m$^2$), $M_F$ is the dispersion mass feed rate (in g/min), N is the number of passes over the substrate, $\eta$ is the spray transfer efficiency at each pass (which should be at least 50%), W is the substrate width (in meters), v is the actuation velocity (in m/min). In one process of the invention, the target mean coat weight $\Theta = 20$ -d, $M_F = 35$ g/min, $\eta \sim 60$ - 70%, and W = 0.107 m. In this process, multiple coating passes could be used so long as the total residence time of a given substrate underneath the nozzle did not exceed about 3 or 4 seconds; longer coating times left the thin sub-layers ineffective by evaporation.

As already mentioned, the spray coating process of the invention may include the use of a masking material covering part of the substrate so that, after removal of the masking material, capsules remain only on those portions of the substrate where the masking material was not present. The masking material used to cover part of the substrate should not be porous, or at least should have low enough porosity to ensure that capsule deposition on to the masked areas of the substrate does not occur. The masking material should not significantly absorb the liquid (usually aqueous) in which the capsules are dispersed, and should be placed close enough to the surface of the substrate that lateral draft of capsules beneath the masking material from the unmasked regions of the substrate into the masked areas does not occur. After the capsules have been deposited on the substrate, the capsules may be dried (or otherwise treated to form a coherent layer, for example by exposure to radiation) with the masking material still in position, or the masking material may first be removed and then the capsules dried or otherwise treated. In either case, the physical properties of the masking material and the capsule dispersion should be chosen so that, during the removal of the masking material, capsules are not dragged into previously masked areas of the substrate, nor are capsules removed from unmasked areas (for example, by irregular tearing of a coherent dried layer of capsules.

The masking film may comprise an adhesive pre-laminated on to the surface on to which the capsules are to be deposited, and a release film exposed to the spray. After capsule deposition, the release film is removed, followed by additional processing. The resultant spray-printed film may then be laminated to a backplane, which may be either transparent or opaque.

Figure 10 is a top plan view of a first electrophoretic produced by a masked spray coating process of the invention. The backplane is made transparent to allow visibility through the display outside of the areas (circles in Figure 10) on which the capsules have been deposited. Such a backplane can generate a patterned image with as many individual optical states as the electrophoretic medium is capable of generating. In the display shown in Figure 10, the capsules contain a white and a magenta pigment, so that all possible states of the display are a combination of magenta and/or white, including the extreme magenta and white optical states.

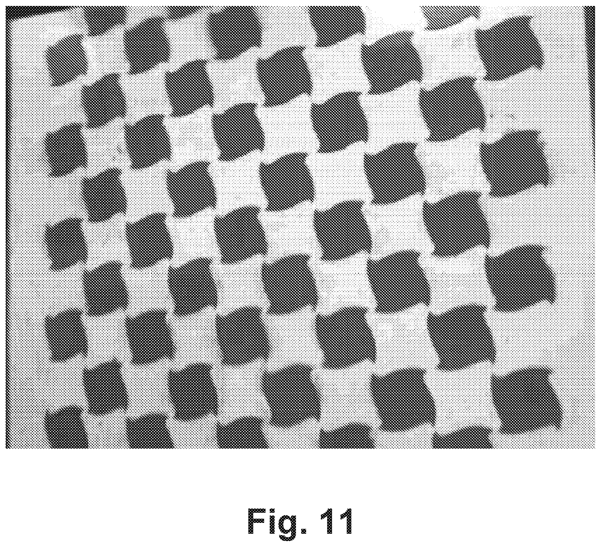

As already mentioned, the masked spray coating process of the invention may comprise more than one coating step and thus allow deposition of two or more different electrophoretic media on a single substrate. Figure 11 is a top plan view of a display produced in this manner. The display shown in Figure 11 is produced by applying a first masking material to a front plane electrode, and then spray coating electrophoretic capsules containing blue and white pigments over the first masking material. After drying the capsules and removing the first masking material, a second masking material is applied to the front electrode, and electrophoretic capsules containing yellow and white pigments are spray coated on to the electrode. The second masking material is then removed and the front electrode and overlying electrophoretic layer laminated to a backplane. The display shown in Figure 11 has two primary optical states, namely a uniform color determined by the common pigment (in this case, white) and a second patterned (blue/yellow) state as illustrated in Figure 11.

The spray coating process of the present invention overcomes the limitation of prior art coating processes such as slot coating and thus provides the ability to do patch coating and coating of three dimensional objects. The spray coating process is also less susceptible to streaking due to clogging of the die in slot coating processes, and thus can offer enhanced yields. The spray coating process also avoids the need for lamination adhesive layers between the electrodes of a display, thus permitting a higher electric field across the electrophoretic layer for a given operating voltage and thus enabling higher white state brightness and higher contrast ratio, as well as the potential for reduced blooming and enhanced microcontrast as a result of the electrophoretic capsules being in direct contact with the backplane.

Printed encapsulated electrophoretic displays are desirable in applications such as window screens, wall panels, or other architectural elements in which either a low information density display or artistic relief is desired with minimal or no active matrix driving. Instead, the interfaces between switching and non-switching, or between two regions of differing electrophoretic medium which switch in a qualitatively different manner, may be pre-patterned into the display. The masked spray coating process of the present invention provides a way of achieving these aims without compromising the mechanical integrity of the deposited capsules.

**Swellable polymer coating process**

The present invention may include forming a monolayer of capsules on a substrate by depositing a solution of a water swellable polymer on the substrate; and thereafter depositing a quantity of the capsules sufficient to form a monolayer of capsules on to the substrate, and allowing the capsules to arrange themselves into a monolayer on the substrate.

In this process, it is important to control the quantity of capsules deposited on each unit area of the substrate; this quantity should be controlled so that the capsules can rearrange on the substrate into a tightly packed monolayer. The rearrangement of capsules may take place immediately after the deposition of the capsules on the substrate but, perhaps more commonly, may take place after the capsule layer is dried or otherwise treated to form a coherent layer of capsules on the substrate.

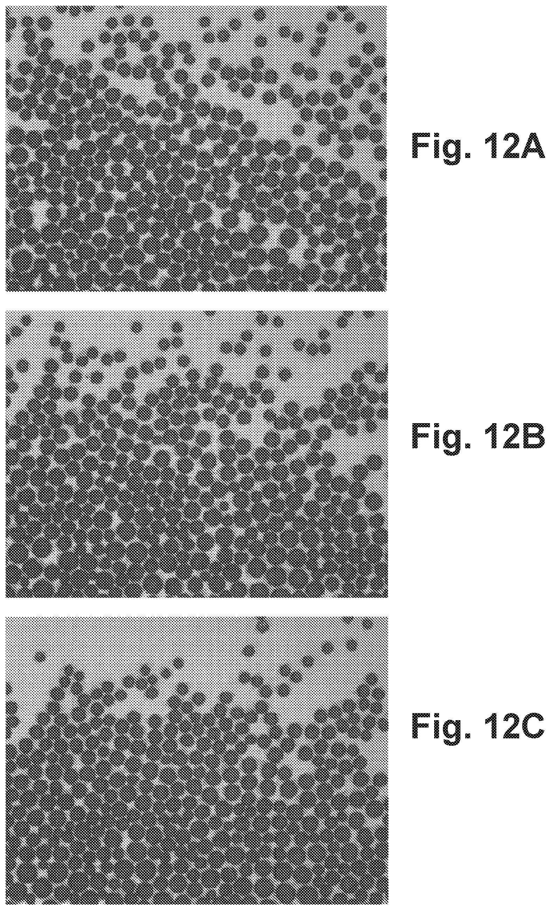

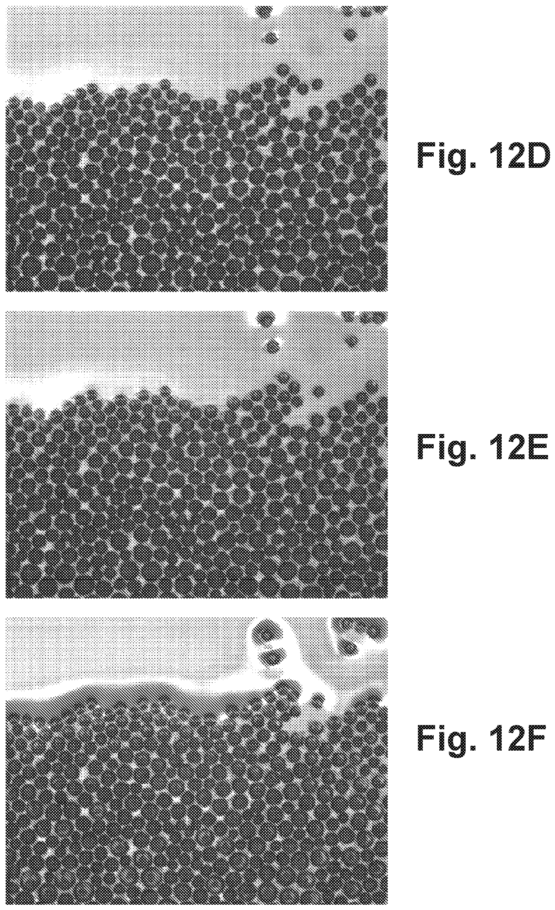

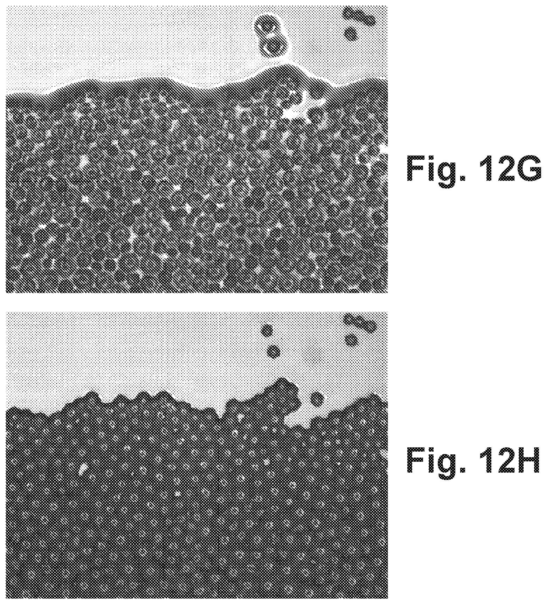

Figures 12A to 12H of the accompanying drawings illustrate successive stages of an experimental process in which a microscope slide was treated with egg albumen and then had capsules deposited thereon from a pipette. It will be seen from these Figures that the originally scattered capsules deposited from the pipette were gradually drawn by capillary forces into a closely packed monolayer covering about three-fourths of the area of the slide shown in the Figures. When a similar experiment was attempted with bar coating on an albumin-treated slide, the capsules simply clung to the coating bar and virtually no capsules were left behind on the slide. When covering much larger areas than a microscope slide, the albumin coating process of the present invention renders it possible to generate large area of closely packed monolayers of capsules.

From the foregoing, it will be seen that the swellable polymer coating process provides a process for generating large quantities of closely packed capsule monolayer coatings using conventional equipment and materials suitable for mass production. The process should produce coatings essentially free from grain, especially if the capsules are applied by spray coating, as the spray should randomize the size distribution of capsules over the coating area. The swellable polymer coating process may be especially useful in providing coatings for use in variable transmission windows, where multilayers of coatings and coating defects (uncoated areas) are highly visible and adversely affect the quality of the windows.

## Claims

1. A process for depositing capsules of an electrophoretic medium on to a substrate, the process comprising:

    forming a dispersion of the capsules in a liquid;
    covering part of the substrate with a masking material prior to depositing the capsules on the substrate, and after the deposition of the capsules, removing the masking material and the capsules thereon so that, after removal of the masking material, capsules remain only on those portions of the substrate where the masking material was not present,
    the process being **characterized in that** the capsules are deposited on to the substrate by spraying, the spraying being effected by feeding the dispersion through a first orifice (608; 708); and
    feeding a continuous stream of gas through a second, annular orifice (610; 710) surrounding the first orifice (608), thereby forming a spray (614) of the capsules.

2. The process of claim 1 wherein a cylindrical baffle (612) is provided surrounding the second, annular orifice (610) to constrain the gas passing through the second, annular orifice (610).

3. The process of claim 1 wherein a plurality of shaping air bores (616; 716A, 716B) are provided surrounding the second, annular orifice (610, 710) and air is directed through the shaping air bores (616; 716A, 716B) to impinge on the spray (614), thereby causing the spray (614) to widen before contacting the substrate (620).

4. The process of claim 1 wherein the second, annular orifice (610; 710) has an outlet cross section between 5.0 and 7.0 times the cross-section of the first orifice (608; 708).

5. The process of claim 1 wherein the first orifice (608; 708) has a diameter in the range of 1.0 to 1.4 mm

6. The process of claim 1 where the dispersion contains capsules in a weight fraction between 38.0 and 40.5 weight per cent.

7. The process of claim 1 wherein the dispersion further comprises a surfactant.

8. The process of claim 1 wherein the substrate comprises at least one electrode located in a first area (102) of the backplane (100); and the masking material (106; 106A, 106B) is applied to a second area (104) of the backplane (100) spaced from the electrode, so that the process produces a sub-assembly comprising the backplane having its first area (102) covered by the capsules but its second area (104) free from the capsules.

9. The process of claim 1 further comprising depositing a solution of a water-swellable polymer on the substrate prior to the deposition of the capsules therein, and depositing a quantity of the capsules sufficient to form a monolayer of capsules on the substrate, and allowing the capsules to arrange themselves into a monolayer on the substrate.

## Patentansprüche

1. Verfahren zum Abscheiden von Kapseln eines elektrophoretischen Mediums auf einem Substrat, wobei das Verfahren umfasst:

    Bilden einer Dispersion der Kapseln in einer Flüssigkeit;
    Bedecken eines Teils des Substrats mit einem Maskiermaterial vor dem Abscheiden der Kapseln auf dem Substrat, und Entfernen des Maskiermaterials und der Kapseln darauf nach dem Abscheiden der Kapseln, so dass nach Entfernen des Maskiermaterials Kapseln nur auf jenen Abschnitten des Substrats verbleiben, auf denen das Maskiermaterial nicht vorhanden war, wobei das Verfahren **dadurch gekennzeichnet ist, dass** die Kapseln auf dem Substrat durch Sprühen abgeschieden werden, wobei das Sprühen bewirkt wird, indem die Dispersion durch eine erste Öffnung (608; 708) eingespeist wird; und

ein kontinuierlicher Gasstrom durch eine zweite kranzförmige Öffnung (610; 710) eingespeist wird, welche die erste Öffnung (608) umgibt, wodurch ein Spray (614) der Kapseln gebildet wird.

**2.** Verfahren nach Anspruch 1, wobei ein zylindrischer Prallkörper (612) bereitgestellt wird, der die zweite kranzförmige Öffnung (610) umgibt, um das Gas, welches die zweite kranzförmige Öffnung (610) passiert, einzugrenzen.

**3.** Verfahren nach Anspruch 1, wobei eine Vielzahl von Lenkluftbohrungen (616; 716A, 716B) bereitgestellt wird, welche die zweite kranzförmige Öffnung (610, 710) umgeben, und Luft durch die Lenkluftbohrungen (616; 716A; 716B) gelenkt wird, um auf das Spray (614) aufzutreffen, wodurch eine Aufweitung des Sprays (614) vor dem Kontaktieren des Substrats (620) bewirkt wird.

**4.** Verfahren nach Anspruch 1, wobei die zweite kranzförmige Öffnung (610; 710) einen Auslassquerschnitt hat, der zwischen dem 5,0- und dem 7,0-fachen des Querschnitts der ersten Öffnung (608; 708) liegt.

**5.** Verfahren nach Anspruch 1, wobei die erste Öffnung (608; 708) einen Durchmesser im Bereich von 1,0 bis 1,4 mm hat.

**6.** Verfahren nach Anspruch 1, wobei die Dispersion Kapseln in einer Gewichtsfraktion zwischen 38,0 und 40,5 Gewichtsprozent enthält.

**7.** Verfahren nach Anspruch 1, wobei die Dispersion des Weiteren ein Tensid umfasst.

**8.** Verfahren nach Anspruch 1, wobei das Substrat mindestens eine Elektrode umfasst, die sich in einem ersten Bereich (102) der Rückwandplatine (Backplane) befindet; und das Maskiermaterial (106; 106A, 106B) auf einen zweiten Bereich (104) der Backplane (100) aufgebracht wird, der von der Elektrode beabstandet ist, so dass das Verfahren eine Teilanordnung produziert, welche die Backplane umfasst, deren erster Bereich (102) mit den Kapseln bedeckt ist, deren zweiter Bereich (104) jedoch frei von den Kapseln ist.

**9.** Verfahren nach Anspruch 1, des Weiteren umfassend Abscheiden einer Lösung eines wasserquellbaren Polymers auf dem Substrat vor dem Abscheiden der Kapseln darin, und Abscheiden einer ausreichenden Menge der Kapseln, um eine Monoschicht der Kapseln auf dem Substrat zu bilden, und Zulassen, dass die Kapseln sich selbst zu einer Monoschicht auf dem Substrat anordnen.

**Revendications**

**1.** Procédé de dépôt de capsules d'un milieu électrophorétique sur un substrat, le procédé comprenant :

la formation d'une dispersion des capsules dans un liquide ;
le recouvrement d'une partie du substrat avec un matériau de masquage avant le dépôt des capsules sur le substrat, et après le dépôt des capsules, le retrait du matériau de masquage et des capsules par-dessus de telle sorte que, après le retrait du matériau de masquage, il reste des capsules uniquement sur les parties du substrat où le matériau de masquage n'était pas présent,
le procédé étant **caractérisé en ce que** les capsules sont déposées sur le substrat par pulvérisation, la pulvérisation étant effectuée par avance de la dispersion à travers un premier orifice (608 ; 708) ; et
la projection d'un courant continu de gaz à travers un deuxième orifice, annulaire (610 ; 710) entourant le premier orifice (608), ce qui forme ainsi un jet (614) des capsules.

**2.** Procédé de la revendication 1 dans lequel est prévu un déflecteur cylindrique (612) entourant le deuxième orifice, annulaire (610) pour confiner le gaz passant à travers le deuxième orifice, annulaire (610).

**3.** Procédé de la revendication 1 dans lequel une pluralité d'orifices de passage d'air de façonnage (616 ; 716A, 716B) entourant le deuxième orifice, annulaire (610 ; 710) est prévue et de l'air est dirigé à travers les orifices de passage d'air de façonnage (616 ; 716A, 716B) pour frapper le jet (614), conduisant ainsi le jet (614) à s'élargir avant d'entrer en contact avec le substrat (620) .

**4.** Procédé de la revendication 1 dans lequel le deuxième orifice, annulaire (610 ; 710) a une section transversale de sortie comprise entre 5,0 et 7,0 fois la section transversale du premier orifice (608 ; 708).

**5.** Procédé de la revendication 1 dans lequel le premier orifice (608 ; 708) a un diamètre dans la gamme de 1,0 à 1,4 mm.

**6.** Procédé de la revendication 1 dans lequel la dispersion contient des capsules dans une fraction pondérale comprise entre 38,0 et 40,5 pour cent en poids.

**7.** Procédé de la revendication 1 dans lequel la dispersion comprend en outre un tensioactif.

**8.** Procédé de la revendication 1 dans lequel le substrat comprend au moins une électrode située dans une première zone (102) du fond de panier (100), et le matériau de masquage (106 ; 106A, 106B) est appliqué à une deuxième zone (104) du fond de panier (100) espacée de l'électrode, de telle sorte que le procédé produit un sous-ensemble comprenant le fond de panier ayant sa première zone (102) recouverte par les capsules, mais sa deuxième zone (104) dépourvue des capsules.

**9.** Procédé de la revendication 1 comprenant en outre le dépôt d'une solution d'un polymère gonflable à l'eau sur le substrat avant le dépôt des capsules à l'intérieur, et le dépôt d'une quantité des capsules suffisante pour former une monocouche de capsules sur le substrat, et l'action de laisser les capsules s'organiser elles-mêmes en une monocouche sur le substrat.

**Fig. 1**

EP 3 704 537 B1

EP 3 704 537 B1

| 106 | 108 | 106 |
|---|---|---|

**Fig. 2A**

100

108

100

**Fig. 2B**

112

114

110

**Fig. 2C**

112

110

114

116

108

100

**Fig. 2C**

EP 3 704 537 B1

| 106 | 108 | 106 |

**100**

**Fig. 3A**

**214**

| 106 | 108 | 106 |

**100**

**Fig. 3B**

**214**

**108**

**100**

**Fig. 3C**

**110**
112

**214** **116**

**108**

**100**

**Fig. 3D**

Fig. 4A

Fig. 4B

Fig. 4C

Fig. 4D

106A

106B

102

100

104

**Fig. 5**

Fig. 6

Fig. 7

EP 3 704 537 B1

Fig. 8

Fig. 9

Fig. 10

Fig. 11

Fig. 12A

Fig. 12B

Fig. 12C

Fig. 12D

Fig. 12E

Fig. 12F

Fig. 12G

Fig. 12H

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6982178 B
- US 7561324 B
- US 7839564 B
- US 7170670 B
- US 5808783 A
- US 5777782 A
- US 5760761 A
- US 6054071 A
- US 6055091 A
- US 6097531 A
- US 6128124 A
- US 6137467 A
- US 6147791 A
- US 6301038 B
- US 6870657 B
- US 6950220 B
- US 7420549 B
- US 7321459 B
- US 7236291 B
- US 7002728 B
- US 7679814 B
- US 6922276 B
- US 7411719 B
- US 6825829 B
- US 7236292 B
- US 7443571 B
- US 7513813 B
- US 7636191 B
- US 7649666 B
- US 7728811 B
- US 7729039 B
- US 7791782 B
- US 7843621 B
- US 7843624 B
- US 8034209 B
- US 8068272 B
- US 8077381 B
- US 8177942 B
- US 8390301 B
- US 8482852 B
- US 8786929 B
- US 8830553 B
- US 8854721 B
- US 9075280 B
- US 20090109519
- US 20090168067
- US 20110164301
- US 20140027044
- US 20140115884
- US 20140340738
- US D485294 S
- US 6124851 A
- US 6130773 A
- US 6177921 B
- US 6232950 B
- US 6252564 B
- US 6312304 B
- US 6312971 B
- US 6376828 B
- US 6392786 B
- US 6413790 B
- US 6422687 B
- US 6445374 B
- US 6480182 B
- US 6498114 B
- US 6506438 B
- US 6518949 B
- US 6521489 B
- US 6535197 B
- US 6545291 B
- US 6639578 B
- US 6657772 B
- US 6664944 B
- US 6680725 B
- US 6683333 B
- US 6724519 B
- US 6750473 B
- US 6816147 B
- US 6819471 B
- US 6825068 B
- US 6831769 B
- US 6842167 B
- US 6842279 B
- US 6842657 B
- US 6865010 B
- US 6967640 B
- US 6980196 B
- US 7012735 B
- US 7030412 B
- US 7075703 B
- US 7106296 B
- US 7110163 B
- US 7116318 B
- US 7148128 B
- US 7167155 B
- US 7173752 B
- US 7176880 B

- US 7190008 B
- US 7206119 B
- US 7223672 B
- US 7230751 B
- US 7256766 B
- US 7259744 B
- US 7280094 B
- US 7327511 B
- US 7349148 B
- US 7352353 B
- US 7365394 B
- US 7365733 B
- US 7382363 B
- US 7388572 B
- US 7442587 B
- US 7492497 B
- US 7535624 B
- US 7551346 B
- US 7554712 B
- US 7583427 B
- US 7598173 B
- US 7605799 B
- US 7649674 B
- US 7667886 B
- US 7672040 B
- US 7688497 B
- US 7733335 B
- US 7785988 B
- US 7843626 B
- US 7859637 B
- US 7893435 B
- US 7898717 B
- US 7957053 B
- US 7986450 B
- US 8009344 B
- US 8027081 B
- US 8049947 B
- US 8077141 B
- US 8089453 B
- US 8208193 B
- US 8373211 B
- US 8389381 B
- US 8498042 B
- US 8610988 B
- US 8728266 B
- US 8754859 B
- US 8830560 B
- US 8891155 B
- US 8989886 B
- US 9152003 B
- US 9152004 B

- US 20020060321
- US 20040105036
- US 20050122306
- US 20050122563
- US 20070052757
- US 20070097489
- US 20070109219
- US 20090122389
- US 20090315044
- US 20110026101
- US 20110140744
- US 20110187683
- US 20110187689
- US 20110292319
- US 20130278900
- US 20140078024
- US 20140139501
- US 20140300837
- US 20150171112
- US 20150205178
- US 20150226986
- US 20150227018
- US 20150228666
- US 20150261057
- WO 0038000 A
- EP 1099207 B1
- EP 1145072 B1
- US 7075502 B
- US 7012600 B
- US 7453445 B
- US 7312784 B
- US 8009348 B
- US 6241921 B
- US 8319759 B
- US 8994705 B
- US 20120293858
- US 6866760 B
- US 5872552 A
- US 6130774 A
- US 6144361 A
- US 6172798 B
- US 6271823 B
- US 6225971 B
- US 6184856 B
- US 4418346 A
- US 7339715 B
- JP 2005173044 A
- US 20130082120 A1
- US 6839158 B
- US 7733554 B

**Non-patent literature cited in the description**

- **HAYES, R.A. et al.** Video-Speed Electronic Paper Based on Electrowetting. *Nature,* 2003, vol. 425, 383-385

- **KITAMURA, T. et al.** Electrical toner movement for electronic paper-like display. *IDW Japan,* 2001

- **YAMAGUCHI, Y. et al.** Toner display using insulative particles charged triboelectrically. *IDW Japan,* 2001